# EUROPÄISCHE PATENTSCHRIFT

(11) **EP 0 478 945 B1**
(45) Veröffentlichungstag und Bekanntmachung des Hinweises auf die Patenterteilung: **05.06.1996**
(21) Anmeldenummer: 91114222.2
(22) Anmeldetag: 24.08.1991
(51) Int. Cl.: F16H 61/06, F16H 61/04

(54) **Verfahren zum selbsttätigen Schalten mittels Druckmittel-Hilfskraft eines Mehrwege-Zahnräderwechselgetriebes**
Automatic gear change method of a multiple-path-gear-transmission using servo pressure means
Procédé de changement de vitesse automatique d'une transmission à roues dentées à positions multiples au moyen d'assistance par pression

(30) Priorität: 05.10.1990 DE 4031570
(43) Veröffentlichungstag der Anmeldung: 08.04.1992
(73) Patentinhaber: MERCEDES-BENZ AG, D-70327 Stuttgart (DE)
(72) Erfinder: Jürgens, Gunter, Dipl.-Ing., W-7000 Stuttgart 1 (DE); Wagner, Gerhard, Dr.-Ing., W-7148 Remseck (DE); Tietze, Frank, Dipl.-Ing., W-7000 Stuttgart 71 (DE)

(56) Entgegenhaltungen:
- DE-A- 4 017 961
- DE-C- 4 000 832
- US-A- 4 186 627
- US-A- 4 742 732
- SOVIET ENGINEERING RESEARCH Bd. 9, Nr. 5, 1989, NEW YORK, US Seiten 4 - 10 LIFSHITS, I.I. AND G.I. 'Improvement of continuously variable automatic drives of automobiles with preselective control and nonseparating gearchange'

## Beschreibung

Die Erfindung bezieht sich auf ein Verfahren nach dem Oberbegriff von Patentanspruch 1.

Bei einem bekannten Verfahren dieser Art (VDI Berichte Nr.672, 1988, Seite 383) mit einer Getriebeanordnung mit zwei Teilgetrieben wird es als nachteilig angesehen, daß Umschaltungen ohne Zugkraftunterbrechung nur zwischen zwei Gängen möglich sind, bei denen der Kraftfluß nicht über ein- und dasselbe Teilgetriebe erfolgt und mithin eine Überschneidungssteuerung für die Lastschaltkupplungen erfolgen kann - weshalb ein Gangspringen nur über zwei Gänge als möglich angesehen wird.

Aus der EP 0 273 735 A2 ist ein Verfahren zur elektronischen Steuerung eines über eine Lastschaltkupplung einem Antriebsmotor im Kraftfluß nachgeordneten Zahnräderwechselgetriebes bekannt, bei welchem ein optimaler Gang in Abhängigkeit von Schaltlinien ausgewählt wird, welche Fahrgeschwindigkeit und Fahrpedalstellung berücksichtigen. Wenn ein Schaltbefehl für eine Hochschaltung über zwei oder mehr Gänge ausgegeben wird, wird zunächst in den nächst höheren Gang für eine vorbestimmte Zeitspanne geschaltet, während der die Hochschaltung des Schaltbefehles unterdrückt wird.

Aus der DE 34 06 218 A1 ist ein Verfahren zum selbsttätigen Herunterschalten mittels Druckmittel-Hilfskraft vom IV. Gang in den II. Gang eines Mehrwege-Planetenrädervechselgetriebes mit einer Getriebeanordnung bekannt, bei welcher eine Eingangswelle mit einer Ausgangswelle im IV. Gang über ein erstes einfaches Planetenräder-Teilgetriebe durch Einrücken einer im Kraftfluß zwischen Eingangswelle und diesem Teilgetriebe liegenden ersten reibschlüssigen Schaltkupplung, dagegen im II. Gang zusätzlich über ein zweites einfaches Planetenräder-Teilgetriebe durch eine direkte Verbindung zwischen der Eingangswelle und dem inneren Zentralrad des zweiten Teilgetriebes sowie durch Einrücken einer mit dem Planetenträger des ersten Teilgetriebes und mit dem äußeren Zentralrad des zweiten Teilgetriebes verbundenen zweiten reibschlüssigen Schaltkupplung in Antriebsverbindung gebracht sind, während in dem dazwischen liegenden III. Gang Ein- und Ausgangswelle durch Einrücken beider Schaltkupplungen über die dadurch als Block umlaufenden beiden Teilgetriebe miteinander gekuppelt sind. Bei der IV-II-Schaltung wird eine Drosselvorrichtung wirksam, welche das Einrücken der zweiten Schaltkupplung gegenüber ihrem Einrücken bei der IV-III-Schaltung verzögert.

Die der Erfindung zugrunde liegende Aufgabe besteht im wesentlichen darin, bei einem Verfahren nach dem Oberbegriff von Patentanspruch 1 eine Umschaltung ohne Zugkraftunterbrechung zwischen zwei nach ihrer Übersetzung nicht benachbarten Gängen zu ermöglichen, bei denen ein- und dasselbe Teilgetriebe in die Antriebsverbindung zwischen Ein- und Ausgangswelle eingeschaltet ist und mithin bei einer Getriebeanordnung bspw. mit nur zwei Teilgetrieben nur ein einziger Gang übersprungen wird (Schaltungen über zwei Gänge).

Die erläuterte Aufgabe ist in vorteilhafter Weise mit den kennzeichnenden Merkmalen von Patentanspruch 1 gelöst.

Bei dem Verfahren nach der Erfindung sind unangenehme Drehmomentschwankungen an der Ausgangswelle weitgehend vermieden, weil einerseits ein direkter Sprung des Drehmomentes zwischen den den beiden nichtbenachbarten Gängen zugehörigen Drehmomentwerten vermieden und andererseits das Drehmoment im vorübergehend jeweils mittels Überschneidungssteuerung, d. h. ohne Zugkraftunterbrechung ein- und ausgerückten mittleren Gang auf einen solchen Drehmomentwert mittels des Arbeitsdruckes zur Betätigung der diesem Gang zugehörigen Lastschaltkupplung eingesteuert wird, daß sich jeweils ein ruckarmer Übergang zwischen diesem Drehmomentwert einerseits und den beiden Drehmomentwerten der nicht benachtbarten Gänge andererseits ergibt.

Die Erfindung ist sowohl bei Hochschaltungen als auch bei Rückschaltungen anwendbar, wobei im ersteren Falle das Kupplungsmoment im mittleren Gang im erfindungsgemäßen Sinne oberhalb des diesem mittleren Gang zugehörigen Wertes, dagegen bei Rückschaltungen entsprechend unterhalb des dem mittleren Gang zugehörigen Wertes gehalten wird.

Bei dem Verfahren nach der Erfindung wird bei einer Rückschaltung über zwei nach ihrer Übersetzung nicht benachbarte Gänge durch die einleitende Maßnahme nach Patentanspruch 2 erreicht, daß der Antriebsmotor in einer ersten Schaltphase durch Absenkung des Arbeitsdruckes auftouren kann, d. h. die Drehzahl der Eingangswelle steigt bereits mit Beginn der Umschaltung stetig an.

In der ersten Schaltphase kann das Kupplungsstellglied zur Betätigung der Lastschaltkupplung des im mittleren Gang in die Antriebsverbindung eingeschalteten Teilgetriebes gemäß Patentanspruch 3 gefüllt bzw. unter einen Anlegedruck gesetzt werden.

Wenn die Motordrehzahl und somit die Drehzahl der Eingangswelle beim Auftouren den Drehzahlwert des mittleren Ganges erreicht, kann gemäß Patentanspruch 4 ein Wechsel in der Betätigung der Lastschaltkupplungen erfolgen, wobei der mittlere Gang unter reduzierter Erregung der betreffenden Lastschaltkupplung (Patentanspruch 5) eingelegt wird, ohne daß der stetige Anstieg der Drehzahl der Eingangswelle unterbrochen wird, so daß auch keine wesentlichen Drehmomentsprünge am Getriebeabtrieb auftreten.

Wenn die Drehzahl der Eingangswelle fast auf den Drehzahlwert des neuen Ganges angestiegen ist, kann gemäß Patentanspruch 6 der Antriebsmotor abgefangen, d. h. das Auftouren des Motores verringert werden.

Wenn das Füllen des Kupplungsstellgliedes zur Betätigung der Lastschaltkupplung des in beiden nicht benachbarten Gängen in die Antriebsverbindung eingeschalteten Teilgetriebes beendet ist, was sich durch einen Druckanstieg im Kupplungstellglied anzeigt, kann gemäß Patentanspruch 7 eine Überschneidungssteuerung zum Schalten ohne Zugkraftunterbrechung auf den neuen Gang ausgelöst werden.

Bei Umschaltungen von Mehrwege-Zahnräderwechselgetrieben mit jeweils durch eine Zahnradkupplung mit ihrer Welle kuppelbaren Losrädern ist es üblich, in einem jeweils nicht in die Antriebsverbindung zwischen Eingangswelle und Ausgangswelle eingeschalteten Teilgetriebe das Losrad einer dem jeweils geschalteten Gang in Bezug auf die Übersetzung benachbarten Zahnradstufe durch Einrücken seiner zugehörigen Zahnradkupplung quasi vorzuwählen.

Bei dem Verfahren nach der Erfindung wird bei einer Rückschaltung über zwei nicht benachbarte Gänge die Zahnradstufe des mittleren Ganges durch die Maßnahme nach Patentanspruch 8 eingerückt.

Bei dem Verfahren nach der Erfindung wird bei einer Rückschaltung über zwei nicht benachbarte Gänge die Zahnradkupplung der Zahnradstufe des niedrigeren der beiden nicht benachbarten Gänge durch die Maßnahme gemäß Patentanspruch 9 eingerückt.

Bei dem Verfahren nach der Erfindung werden bei einer Hochschaltung über zwei nach ihrer Übersetzung nicht benachbarte Gänge in Vorbereitung einer Schaltung auf den mittleren Gang zunächst die Maßnahmen nach den Patentansprüchen 10 und 11 getroffen. Eine anschließende Einschaltung des mittleren Ganges ohne Zugkraftunterbrechung erfolgt dann gemäß der Überschneidungssteuerung nach Patentanspruch 12.

Wenn die Lastschaltkupplung des mittleren Ganges das Drehmoment der Eingangswelle allein übertragen kann, ist die andere Lastschaltkupplung bzw. deren zugehöriger Arbeitsdruck vollständig abgeschaltet, so daß gemäß Patentanspruch 13 der mittlere Gang eingelegt werden kann und das Drehmoment so hoch über dem dem mittleren Gang zugehörigen Drehmomentwert eingesteuert wird, daß der Antriebsmotor bzw. dessen Drehzahl stetig verzögert wird.

In Vorbereitung einer Einschaltung des höheren der beiden nicht benachbarten Gänge wird bei dem Verfahren nach der Erfindung in der dritten Schaltphase ein Kupplungssteuersignal gemäß Patentanspruch 14 zum Füllen der dem höheren Gang zugehörigen Lastschaltkupplung bzw. des betreffenden Kupplungsstellgliedes erzeugt.

Danach schließt sich eine Umschaltung vom mittleren auf den höheren Gang ohne Zugkraftunterbrechung bei weiter stetig abfallendem Verlauf der Motordrehzahl gemäß Patentanspruch 15 an.

In einer sich anschließenden Schaltphase wird bei dem Verfahren nach der Erfindung der Antriebsmotor weiterhin stetig in seiner Drehzahl gemäß der Maßnahme von Patentanspruch 16 verzögert.

Die Hochschaltung über zwei nicht benachbarte Gänge ist bei dem Verfahren nach der Erfindung durch die Maßnahme von Patentanspruch 17 beendet, wenn die Motordrehzahl auf den dem höheren Gang entsprechenden Drehzahlwert abgefallen ist.

Bei dem Verfahren nach der Erfindung können bei einer Hochschaltung über zwei nicht benachbarte Gänge die Zahnradkupplung der Zahnradstufe des mittleren Ganges gemäß Patentanspruch 18 und die Zahnradkupplung der Zahnradstufe des höheren Ganges gemäß Patentanspruch 19 betätigt bzw. gesteuert werden.

Bei dem Verfahren nach der Erfindung kann bei einer Hochschaltung über zwei nicht benachbarte Gänge das Kupplungssteuersignal für den Füllbeginn der Lastschaltkupplung bzw. des Kupplungsstellgliedes des höheren Ganges in der dritten Schaltphase gemäß Patentanspruch 20 erzeugt werden.

Einzelheiten der Erfindung ergeben sich aus der nachstehenden Beschreibung von zwei in der Zeichnung schematisch dargestellten Ausführungsbeispielen. In der Zeichnung bedeuten:
- Fig. 1:: ein Zweiwege-Zahnrädervechselgetriebe, bei dem das Verfahren nach der Erfindung anwendbar ist,
- Fig. 2:: ein Blockschaltbild einer Steuer- und Schaltvorrichtung für das Zweiwege-Zahnrädervechselgetriebe von Fig. 1,
- Fign. 3a - d:: vier Diagramme, bei denen bei einem ersten Ausführungsbeispiel für eine Rückschaltung über zwei nicht benachbarte Gange jeweils der Verlauf der Arbeitsdrücke (3a), der Kupplungsmomente der Lastschaltkupplungen (3b), des Abtriebsdrehmomentes (3c) und der Drehzahl der Eingangswelle (3d) jeweils über der Zeit aufgetragen ist, und
- Fign. 4a - d:: die entsprechenden Diagramme von Fig. 3, jedoch bei einem zweiten Ausführungsbeispiel für eine Hochschaltung über zwei nicht benachbarte Gänge.

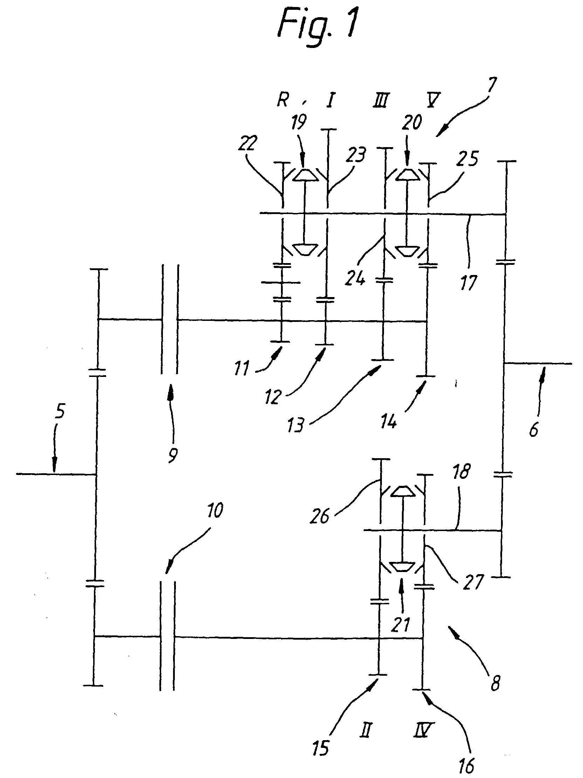

Unter Bezugnahme auf Fig. 1 ist eine Eingangswelle 5, welche von einem Antriebsmotor eines Kraftfahrzeuges über einen hydrodynamischen Drehmomentwandler antreibbar ist, unter Vermittlung je einer Lastschaltkupplung 9 bzw. 10 über zwei im Kraftfluß parallel zueinander liegende Teilgetriebe 7 und 8 mit einer Ausgangswelle 6 verbunden, welche in der üblichen Weise mit wenigstens einer Fahrzeugachse des Kraftfahrzeuges in Antriebsverbindung stehen bzw. gebracht werden kann.

Das eine Teilgetriebe 7 weist vier Zahnradstufen 11 bis 14 auf, mit denen jeweils der Rückwärtsgang R bzw. die drei Vorwärtsgänge I, III und V gebildet werden. Die beiden Losräder 22 und 23 der räumlich nebeneinander liegenden Zahnradstufen 11 und 12 sind mit ihrer Vorgelegewelle 17 durch eine dazwischenliegende Zahnradkupplung 19, welche in der neutralen, ausgerückten Stellung gezeichnet ist, fakultativ kuppelbar. Die beiden Losräder 24 und 25 der räumlich nebeneinander liegenden Zahnradstufen 13 und 14 sind durch eine dazwischenliegende Zahnradkupplung 20, welche in ihrer neutralen, ausgerückten Stellung gezeichnet ist, fakultativ mit der Vorgelegewelle 17 kuppelbar.

Das andere Teilgetriebe 8 weist eine Zahnradstufe 15 mit einem Losrad 26 zur Bildung des II. Ganges sowie eine räumlich benachbarte Zahnradstufe 16 mit einem Losrad 27 zur Bildung des IV. Ganges auf. Die beiden Losräder 26 und 27 sind durch eine dazwischenliegende Zahnradkupplung 21 mit ihrer Vorgelegewelle 18 fakultativ kuppelbar, wobei die Zahnradkupplung 21 in ihrer neutralen, ausgerückten Stellung gezeichnet ist.

Die Zahnradkupplungen 19 und 20 des einen Teilgetriebes 7 werden durch Vorwahl eingerückt, wenn die zugehörige Lastschaltkupplung 9 ausgerückt und der Kraftfluß unter Einrücken der anderen Lastschaltkupplung 10 über eine der Zahnradstufen 15, 16 des Teilgetriebes 8 gelegt ist.

Andererseits wird die Zahnradkupplung 21 des anderen Teilgetriebes 8 durch Vorwahl eingerückt, wenn die zugehörige Lastschaltkupplung 10 ausgerückt und der Kraftfluß unter Einrücken der anderen Lastschaltkupplung 9 über eine der Zahnradstufen 11 bis 14 des Teilgetriebes 7 gelegt ist.

Um eine Überschneidungssteuerung der beiden Lastschaltkupplungen 9 und 10 für die Gangwechsel zwischen zwei nach der Übersetzung benachbarten Gängen ohne Zugkraftunterbrechung vornehmen zu können, sind die Übersetzungen der Zahnradstufen 11 bis 16 so aufeinander abgestimmt, daß für diese besagten Gangwechsel auch ein Wechsel des Kraftflusses von dem einen Teilgetriebe auf das andere erfolgt. Überschneidungssteuerungen sind bekannt, vgl. bspw. Förster "Das kraftschlüssige Schalten von Übersetzungsstufen von Fahrzeuggetrieben" VDI-Zeitung 99 (1957) Nr. 27; 21. September.

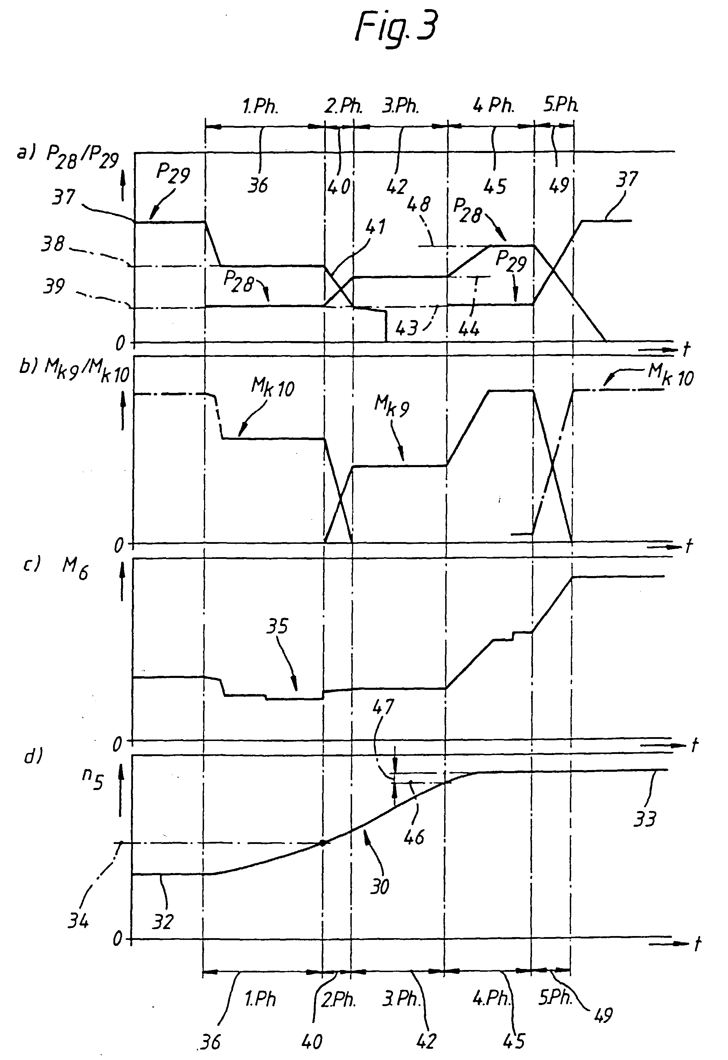

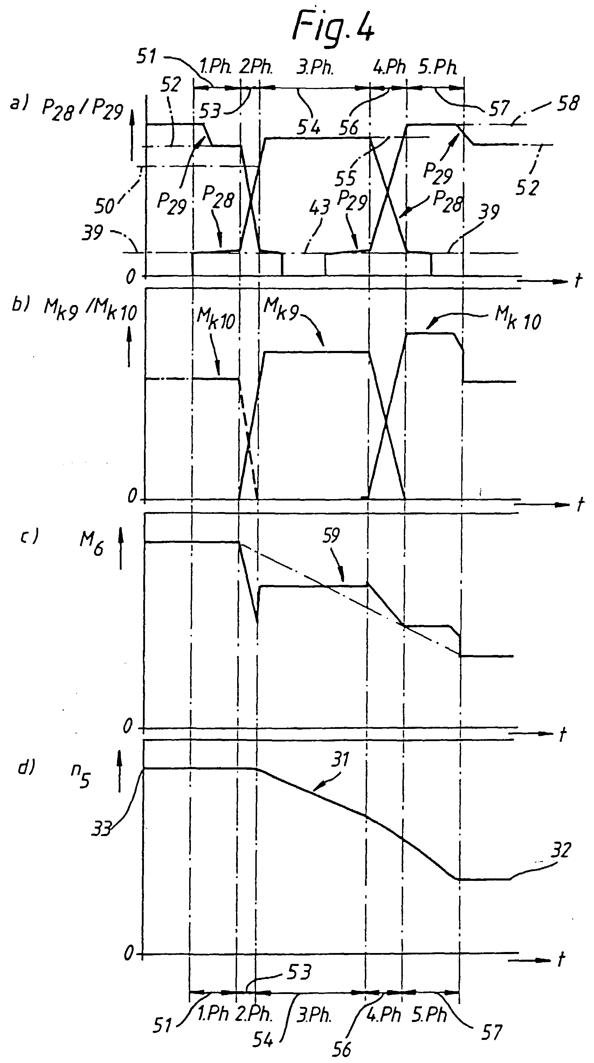

Demgegenüber ermöglicht das Verfahren nach der Erfindung einen Wechsel zwischen zwei in ein- und demselben Teilgetriebe gebildeten Gängen, die aufgrund der vorerwähnten Auslegung der Übersetzungen der Zahnradstufen zueinander nicht benachbart sind, ohne Unterbrechung der Zugkraft. Das Verfahren wird weiter unten für eine Rückschaltung bspw. vom IV. in den II. Gang insbesondere anhand der Fig. 3 sowie für eine Hochschaltung bspw. vom II. in den IV. Gang insbesondere anhand der Fig. 4 beschrieben.

Selbstverständlich sind auch alle übrigen bei dem dargestellten Ausführungsbeispiel einer Getriebeanordnung möglichen Hoch- und Rückschaltungen über zwei nicht benachbarte Gänge nach dem erfindungsgemäßen Verfahren durchführbar.

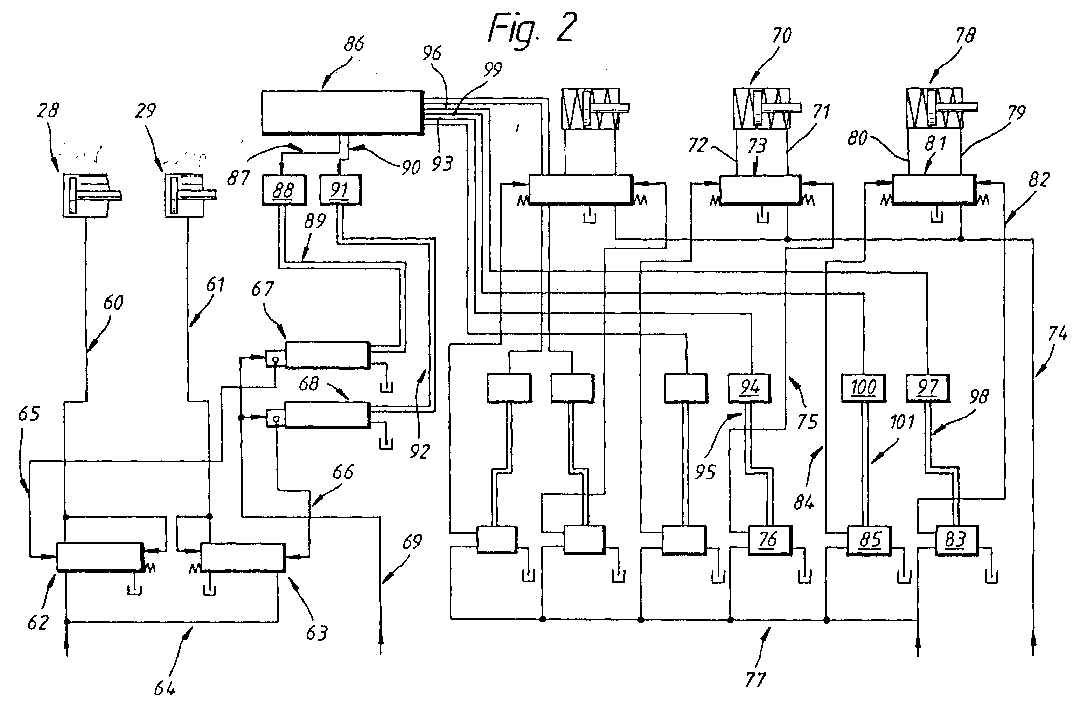

Zunächst wird jedoch auf das Blockschaltbild der Fig. 2, soweit es zum Verständnis der beiden Schaltungen zwischen dem II. und dem IV. Gang erforderlich ist, eingegangen.

Die Lastschaltkupplung 9 für die Einschaltung des Teilgetriebes 7 in die Antriebsverbindung zwischen Ein- und Ausgangswelle 5 und 6 ist durch ein Kupplungsstellglied 28 der Axialkolben-Bauart einrückbar und durch nicht dargestellte federnde Mittel ausrückbar. Zur Beaufschlagung seines Axialkolbens mit Arbeitsdruck ist an das Kupplungsstellglied 28 eine Arbeitsdruckleitung 60 angeschlossen, welche zu einem Kupplungsschaltventil 62 führt, das von einer Hauptdruckleitung 64 gespeist und über eine Steuerdruckleitung 65 von einem elektromagnetischen Proportionalventil 67 angesteuert wird.

Die Lastschaltkupplung 10 zur Einschaltung des Teilgetriebes 8 in die Antriebsverbindung zwischen Ein- und Ausgangswelle 5 und 6 wird durch ein Kupplungsstellglied 29 der Axialkolben-Bauart eingerückt und durch nicht dargestellte federnde Mittel ausgerückt. Zur Beaufschlagung seines Axialkolbens ist an das Kupplungsstellglied 29 eine Arbeitsdruckleitung 61 angeschlossen, welche zu einem Kupplungsschaltventil 63 führt, welches von der Hauptdruckleitung 64 gespeist und über eine Steuerdruckleitung 66 von einem elektromagnetischen Proportionalventil 68 angesteuert wird.

Eine elektronische Getriebesteuerung 86, welche in bekannter Weise in Abhängigkeit von Eingangssignalen insbesondere bezüglich der Fahrgeschwindigkeit, der Motorlast, der Leistungsanforderung, des Getriebezustandes sowie einer Wählvorrichtung mit Hilfe von gespeicherten Schaltlinien arbeitet, weist Ausgänge 87 und 90 auf, welche über je eine Endstufe 88 bzw. 91 mit jeweils einem der Proportionalventile 67 und 68 mittels Steuerleitungen 89 und 92 verbunden sind, die über eine Nebendruckleitung 69 mit Druck gespeist werden.

Die Zahnradkupplung 20 des Teilgetriebes 8 ist durch ein Schaltstellglied 70 der Axialkolben-Bauart betätigbar, welches durch federnde Mittel in der gezeichneten mittleren Neutralstellung gehalten ist, in der die Losräder 24 und 25 von der Vorgelegewelle 17 abgekuppelt sind. Das Schaltstellglied 70 ist in seine beiden Endstellungen unter Vermittlung angeschlossener Arbeitsdruckleitungen 71 und 72 schaltbar, welche zu einem Schaltventil 73 führen. Das von einer Nebendruckleitung 74 gespeiste Schaltventil 73 ist über eine Steuerdruckleitung 75 von einem elektromagnetischen Schaltsteuerventil 76 ansteuerbar, welches von einer weiteren Nebendruckleitung 77 gespeist und von einem Ausgang 93 der Getriebesteuerung 86 über eine Endstufe 94 und eine angeschlossene Steuerleitung 95 ansteuerbar ist.

Die Zahnradkupplung 21 des Teilgetriebes 8 ist durch ein Schaltstellglied 78 der Axialkolben-Bauart betätigbar, welches durch federnde Mittel in der gezeichneten mittleren Neutralstellung gehalten ist, in der die beiden Losräder 26 und 27 von der Vorgelegewelle 18 abgekuppelt sind. Das Schaltstellglied 78 ist in seine beiden Endstellungen unter Vermittlung angeschlossener Arbeitsdruckleitungen 79 und 80 schaltbar, welche zu einem Schaltventil 81 führen, das von der Nebendruckleitung 74 gespeist wird und über angeschlossene Steuerdruckleitungen 82 und 84 mittels elektromagnetischer Schaltsteuerventile 83 und 85 ansteuerbar ist, die von der Nebendruckleitung 77 gespeist werden. Die Schaltsteuerventile 83 und 85 sind mittels angeschlossener Steuerleitungen 98 und 101 mit Endstufen 97 und 100 von Ausgängen 96 und 99 der Getriebesteuerung 86 her ansteuerbar.

In Fig. 3 ist der Ablauf einer Rückschaltung vom IV. Gang in den II. Gang bei dem Zahnräderwechselgetriebe von Fig. 1 in fünf Schaltphasen wiedergegeben.

In Fig. 3a ist der Verlauf des Arbeitsdruckes p₂₈ im Kupplungsstellglied 28 der Lastschaltkupplung 9 sowie der Verlauf des Arbeitsdruckes p₂₉ im Kupplungsstellglied 29 der Lastschaltkupplung 10 über der Zeit t wiedergegeben.

In Fig. 3b ist der Verlauf des Kupplungsmomentes M_{K9} der Lastschaltkupplung 9 wie auch der Verlauf des Kupplungsmomentes M_{K10} der Lastschaltkupplung 10 über der Zeit t wiedergegeben. In Fig. 3c ist der Verlauf des Abtriebsmoments M₆ der Ausgangswelle 6 über der Zeit t wiedergegeben.

Schließlich gibt Fig. 3d den Verlauf der Drehzahl n₅ der Eingangswelle 5 über der Zeit t wieder.

Im Ausgangszustand des Zahnräderwechselgetriebes - also im IV. Gang - ist die Lastschaltkupplung 10 eingerückt, wobei der Arbeitsdruck p₂₉ im zugehörigen Kupplungsstellglied 29 auf einen Einrückdruckwert 37 durch das Proportionalventil 68 eingestellt ist, bei welchem die Lastschaltkupplung 10 das Drehmoment der Eingangswelle 5 allein überträgt. Im zugehörigen Teilgetriebe 8 ist das Losrad 27 der Zahnräderstufe 16 des IV. Ganges durch die Zahnradkupplung 21 mit der Vorgelegewelle 18 verbunden, so daß das Teilgetriebe 8 in die Antriebsverbindung zwischen Ein- und Ausgangswelle 5 und 6 eingeschaltet ist. Zu diesem Zweck ist die Arbeitsdruckleitung 80 des Schaltstellgliedes 78 zur Betätigung der Zahnradkupplung 21 in die das Losrad 27 mit der Vorgelegewelle 18 kuppelnde Stellung durch das Schaltventil 81 mit der Nebendruckleitung 74 verbunden, wobei das von der Getriebsteuerung 86 her erregte Schaltsteuerventil 85 für den IV. Gang dieses Schaltventil 81 entsprechend angesteuert hat.

Bei dem Teilgetriebe 7 ist die Lastschaltkupplung 9 ausgerückt, weil der Arbeitsdruck p₂₈ im zugehörigen Kupplungsstellglied 28 durch das Kupplungssteuerventil 62 unter Veranlassung durch das Proportionalventil 67 abgeschaltet ist. Das von der Getriebesteuerung 86 her erregte elektromagnetische Schaltsteuerventil 76 hat das Schaltventil 73 in diejenige Stellung umgeschaltet, in welcher die Arbeitsdruckleitung 71 zur Betätigung des Schaltstellgliedes 70 in die Endstellung zum Ankuppeln des Losrades 24 der Zahnradstufe 13 des III. Ganges durch die Zahnradkupplung 20 mit der Nebendruckleitung 74 verbunden ist, so daß im Teilgetriebe 7 der III. Gang in Vorwahl geschaltet ist.

Wenn in der Getriebesteuerung 86 ein Schaltsignal zur Rückschaltung vom IV. Gang in den II. Gang auftritt, wird eine erste Schaltphase 36 durch entsprechende Signale an den Ausgängen 87 und 90 ausgelöst, in welcher das Proportionalventil 68 eine Absenkung des Arbeitsdruckes p₂₉ des Kupplungsstellgliedes 29 der Lastschaltkupplung 10 auf einen konstanten Phasendruckwert 38 veranlaßt, welcher zwischen dem Einrückdruckwert 37 und einem niedrigen Anlegedruckwert 43 liegt und ein stetiges Auftouren des Antriebsmotores erlaubt, wie dies der stetige Anstieg 30 der Drehzahl n₅ zwischen dem dem IV. Gang entsprechenden Drehzahlwert 32 und dem dem III. Gang entsprechenden Drehzahlwert 34 zeigt. Mit Beginn der ersten Schaltphase 36 wird weiterhin eine Einsteuerung von Arbeitsdruck p₂₈ in das Kupplungsstellglied 28 der Lastschaltkupplung 9 durch das Proportionalventil 67 über das Kupplungssteuerventil 62 veranlaßt, wobei sich dieser Arbeitsdruck p₂₈ während des Füllvorganges auf einen Anlegedruckwert 39 einstellt.

Wenn die Drehzahl n₅ der Eingangswelle 5 den dem III. Gang entsprechenden Drehzahlwert 34 erreicht hat, wird eine an die erste sich anschließende zweite Schaltphase 40 ausgelöst, in welcher der Arbeitsdruck p₂₉ des Kupplungsstellgliedes 29 der Lastschaltkupplung 10 nach einer Rampenfunktion 41 abgeschaltet und mittels einer an sich bekannten Überschneidungssteuerung der Arbeitsdruck p₂₈ des Kupplungsstellgliedes 28 der Lastschaltkupplung 9 entsprechend erhöht wird. Auf diese Weise wird ohne Unterbrechung der Zugkraft eine Umschaltung vom IV. Gang vorübergehend in den III. Gang eingeleitet, wobei das Druckniveau nur so hoch gelegt ist, daß der Antriebsmotor stetig weiter auftouren kann.

Wenn der Arbeitsdruck p₂₉ auf den Anlegedruckwert 43 abgefallen ist, wird eine sich an die zweite anschließende dritte Schaltphase 42 ausgelöst, in welcher der Arbeitsdruck p₂₉ des Kupplungsstellgliedes 29 der Lastschaltkupplung 10 vollständig abgeschaltet und der Arbeitsdruck p₂₈ des Kupplungsstellgliedes 28 der Lastschaltkupplung 9 auf einen Phasendruckwert 44 eingeregelt wird, welcher zwischen dem Anlegedruckwert 39 und dem dem III. Gang zugehörigen Einrückdruckwert liegt und nur so hoch ist, daß der Verlauf 30 der Drehzahl n₅ der Eingangswelle 5 weiterhin stetig ansteigt, ohne auf dem Drehzahlwert des III. Ganges zu verharren.

In dieser dritten Schaltphase 42 wird in dem Teilgetriebe 8, insbesondere wenn der Arbeitsdruck p₂₉ des Kupplungsstellgliedes 29 der zugehörigen Lastschaltkupplung 10 vollständig abgeschaltet ist, eine Umschaltung in Vorwahl auf die Zahnradstufe 15 des II. Ganges vorgenommen, indem von der Getriebesteuerung 86 her anstelle des Schaltsteuerventiles 85 das Schaltsteuerventil 83 des II. Ganges erregt wird, wodurch das Schaltventil 81 in diejenige Stellung umgeschaltet wird, in welcher die Nebendruckleitung 74 mit der Arbeitsdruckleitung 79 des Schaltstellgliedes 78 verbunden ist, wodurch die Zahnradkupplung 21 in die das Losrad 26 der Zahnradstufe 15 des II. Ganges mit der Vorgelegewelle 18 kuppelnde Stellung betätigt wird.

Wenn die Drehzahl n₅ der Eingangswelle 5 nach gleichbleibend stetigem Verlauf einen Vorhaltdrehzahlwert 46 erreicht hat, welcher um eine festgelegte Differenzdrehzahl 47 niedriger als der dem II. Gang entsprechende Drehzahlwert 33 ist, wird eine an die dritte sich anschließende vierte Schaltphase 45 ausgelöst, in welcher das Proportionalventil 67, entsprechend beeinflußt durch die Getriebesteuerung 86, eine Erhöhung des Arbeitsdruckes p₂₈ im Kupplungsstellglied 28 der Lastschaltkupplung 9 auf einen gegenüber dem Phasendruckwert 44 der bisherigen Schaltphase höheren Phasendruckwert 48 über das Kupplungsschaltventil 62 veranlaßt, während das Proportionalventil 68, ebenfalls entsprechend beeinflußt durch die Getriebesteuerung 86, den Füllvorgang beim Kupplungsstellglied 29 der Lastschaltkupplung 10 initiiert, indem es die Einsteuerung von Arbeitsdruck p₂₈ über das Kupplungsschaltventil 63 veranlaßt, der sich dabei auf den Anlegedruckwert 43 einstellt.

Dabei wird zum Abfangen des Antriebsmotores der erhöhte Phasendruckwert 48 des Arbeitsdruckes p₂₈ so auf den Anlegedruckwert 43 des Arbeitsdruckes p₂₉ abgestimmt, daß beide Lastschaltkupplungen 9 u nd 10 in Summe das Motormoment, also das Drehmoment der Eingangswelle 5 übertragen und die Drehzahl n₅ der Eingangswelle 5 auf dem Drehzahlwert 33 des II. Ganges gehalten wird.

Wenn der Füllvorgang im Kupplungsstellglied 29 der Lastschaltkupplung 10 beendet ist, was sich durch einen Anstieg des Arbeitsdruckes p₂₉ über den Anlegedruckwert 43 hinaus anzeigt, wird eine sich an die vierte anschließende fünfte Schaltphase 49 ausgelöst, in welcher mittels einer Überschneidungssteuerung der beiden Arbeitsdrücke p₂₈ und p₂₉ die Lastschaltkupplung 9 des III. Ganges abgeschaltet und die Lastschaltkupplung 10 des II. Ganges voll zugeschaltet wird, d. h. mit dem Ablauf der fünften Schaltphase 49 übertragt die Lastschaltkupplung 10 das volle Drehmoment der Eingangswelle 5, wobei der Arbeitsdruck p₂₉ dann den entsprechenden Einrückdruckwert 37 wieder erreicht hat.

Der Verlauf der Kupplungsmomente M_{K9} und M_{K10} der beiden Lastschaltkupplungen 9 und 10 in Fig. 3b erklärt sich selbst aufgrund der vorstehend erläuterten Kurven in Fig. 3a für die zugehörigen Arbeitsdrücke p₂₈ und p₂₉.

Die Fig. 3c veranschaulicht den ruckarmen Verlauf 35 des Abtriebsdrehmomentes M₆ der Ausgangswelle 6 während der erfindungsgemäßen IV-II-Schaltung.

Nachstehend wird das Verfahren nach der Erfindung bei dem zweiten Ausführungsbeispiel für eine Hochschaltung über zwei Gänge, d. h. vom II. in den IV. Gang bei dem zweiwege-Zahnräderwechselgetriebe der Fig. 1 anhand der fünf Schaltphasen von Fig. 4 erläutert.

Im Ausgangszustand des Zahnräderwechselgetriebes - also im II. Gang - sind im Teilgetriebe 7 die Lastschaltkupplung 9 ausgerückt, weil der Arbeitsdruck p₂₈ im zugehörigen Kupplungsstellglied 28 durch das Kupplungsschaltventil 62 vollständig abgeschaltet ist, und das Losrad 24 der Zahnräderstufe 13 des III. Ganges unter Vorwahl durch die Zahnradkupplung 20 mit seiner Vorgelegewelle 17 gekuppelt, weil das Schaltsteuerventil 76 des III. Ganges von der Getriebesteuerung 86 her erregt ist und dadurch das Schaltventil 73 in diejenige Stellung umgeschaltet hat, in welcher die Nebendruckleitung 74 mit derjenigen Arbeitsdruckleitung 71 des Schaltstellgliedes 70 verbunden ist, über die eine Druckbeaufschlagung zur Betätigung der Zahnradkupplung 20 in die das Losrad 24 mit der Vorgelegewelle 17 kuppelnden Stellung erfolgt.

Wenn in der Getriebesteuerung 86 ein Schaltsignal für eine Hochschaltung vom II. Gang in den IV. Gang auftritt, wird über entsprechende Signale an den Ausgängen 87 und 90 eine erste Schaltphase 51 ausgelöst, in welcher der Arbeitsdruck p₂₉ in dem Kupplungsstellglied 29 der Lastschaltkupplung 10 unter Veranlassung durch das Proportionalventil 68 auf einen Einrückdruckwert 52 eingeregelt wird, bei welchem die Lastschaltkupplung 10 noch das volle Drehmoment der Eingangswelle 5 überträgt, während das Proportionalventil 67 bei dem Kupplungsstellglied 28 der Lastschaltkupplung 9 den Füllvorgang unter Einsteuerung von Arbeitsdruck p₂₈ initiiert, wobei sich letzterer über die Dauer des Füllvorganges auf einen Anlegedruckwert 39 einstellt. Die Drehzahl n₅ der Eingangswelle 5 ändert sich hierbei noch nicht.

Wenn der Füllvorgang im Kupplungsstellglied 28 der Lastschaltkupplung 9 beendet ist, was sich durch einen Anstieg des Arbeitsdruckes p₂₈ über den Anlegedruckwert 39 hinaus anzeigt, wird eine sich an die erste anschließende zweite Schaltphase 53 ausgelöst, in welcher unter Anwendung der üblichen Überschneidungssteuerung für die betreffenden Arbeitsdrücke p₂₈ und p₂₉ die Lastschaltkupplung 9 eingerückt und die Lastschaltkupplung 10 ausgerückt werden, so daß diese Schaltphase ohne Unterbrechung der Zugkraft und noch mit konstanter Drehzahl (Drehzahlwert 33 des niedrigeren II. Ganges) der Eingangswelle 5 abläuft.

Wenn der Arbeitsdruck p₂₉ im Kupplungsstellglied 29 der Lastschaltkupplung 10 auf den Anlegedruckwert 43 abgefallen ist, auf den sich der Arbeitsdruck p₂₉ beim Füllen des Kupplungsstellgliedes 29 einstellt, und bei dem der Arbeitsdruck p₂₈ des Kupplungsstellgliedes 28 der Lastschaltkupplung 9 auf den Einrückdruckwert 50 angestiegen ist, bei welchem die Lastschaltkupplung 9 allein das volle Drehmoment der Eingangswelle 5 zu übertragen vermag, wird eine sich an die zweite anschließende dritte Schaltphase 54 ausgelöst, in welcher zwar der III. Gang geschaltet ist, jedoch der Arbeitsdruck p₂₈ des Kupplungsstellgliedes 28 der hierbei leistungsübertragenden Lastschaltkupplung 9 auf einen Phasendruckwert 55 eingeregelt wird, der höher als der Einrückdruckwert 50 ist, so daß der Antriebsmotor derart abgebremst wird, daß seine Drehzahl und somit die Drehzahl n₅ der Eingangswelle 5 - ausgehend von dem Drehzahlwert 33 bei Ende der zweiten Schaltphase 53 - einen stetig fallenden Verlauf 31 nimmt, ohne auf dem Drehzahlwert des III. Ganges zu verharren.

In der dritten Schaltphase 54 wird - insbesondere wenn der Arbeitsdruck p₂₉ des Kupplungsstellgliedes 29 der Lastschaltkupplung 10 vollständig abgeschaltet und somit das Teilgetriebe 8 ohne Antriebsmoment ist - im Teilgetriebe 8 eine Umschaltung von der Zahnradstufe 15 des II. Ganges auf die Zahnradstufe 16 des IV. Ganges mittels der Zahnradkupplung 21 durch Druckbeaufschlagung des Schaltstellgliedes 78 über die Arbeitsdruckleitung 80 vorgenommen, indem anstelle des Schaltsteuerventiles 83 des II. Ganges nunmehr das Schaltsteuerventil 85 des IV. Ganges von der Getriebesteuerung 86 her erregt wird.

Wenn unter diesen Umständen die Zahnradkupplung 21 in ihre das Losrad 27 mit der Vorgelegewelle 18 kuppelnde Stellung gelangt, wird ein Kupplungssteuersignal erzeugt, durch welches das Proportionalventil 68 in dem Kupplungsstellglied 29 der Lastschaltkupplung 10 eine Beaufschlagung mit Arbeitsdruck p₂₉ über das Kupplungsschaltventil 63 sowie einen Druckanstieg mindestens bis auf den Anlegedruckwert 43 veranlaßt.

Wenn in der dritten Schaltphase 54 der Füllvorgang in dem Kupplungsstellglied 29 beendet ist, was sich durch einen Anstieg des Arbeitsdruckes p₂₉ über den Anlegedruckwert 43 hinaus anzeigt, wird eine sich an die dritte Schaltphase 54 anschließende vierte Schaltphase 56 ausgelöst, in welcher unter Anwendung der üblichen Überschneidungssteuerung für die betroffenen Arbeitsdrücke p₂₈ und p₂₉ die Lastschaltkupplung 9 des III. Ganges ausgerückt und die Lastschaltkupplung 10 des IV. Ganges eingerückt wird, wobei auch diese Schaltphase mithin ohne Unterbrechung der Zugkraft - jedoch unter Einsteuerung des erforderlichen Druckniveaus mit weiterhin stetig abfallendem Verlauf 31 der Drehzahl n₅ der Eingangswelle 5 abläuft.

Um den Antriebsmotor weiter stetig auf den Drehzahlwert 32 des IV. Ganges abzubremsen, wird - wenn der Arbeitsdruck p₂₈ in dem Kupplungsstellglied 28 der Lastschaltkupplung 9 auf den Anlegedruckwert 39 abgefallen ist, wobei der Arbeitsdruck p₂₉ bereits über den Einrückdruckwert 52 hinaus aus den genannten Gründen hochgeregelt worden ist, wird eine sich an die vierte Schaltphase 56 anschließende fünfte Schaltphase 57 ausgelöst, in welcher der Arbeitsdruck p₂₉ im Kupplungsstellglied 29 der Lastschaltkupplung 10 auf einen über dem Einrückdruckwert 52 liegenden Phasendruckwert 58 eingeregelt wird.

Während nun in der fünften Schaltphase 57 die Hochschaltung insoweit vollzogen ist, als der Wechsel der Leistungsübertragung von der Lastschaltkupplung 9 des III. Ganges auf die Lastschaltkupplung 10 des IV. Ganges beendet ist, wird der Antriebsmotor durch das erhöhte Druckniveau weiterhin stetig verzögert.

Wenn jedoch die Drehzahl n₅ der Eingangswelle 5 auf den dem IV. Gang entsprechenden Drehzahlwert 32 abgefallen ist, wird das Proportionalventil 68 von der Getriebesteuerung 86 veranlaßt, eine Absenkung des Arbeitsdruckes p₂₉ in dem Kupplungsstellglied 29 der Lastschaltkupplung 10 des IV. Ganges etwa auf den Einrückdruckwert 52 einzuregeln, so daß die Drehzahl n₅ auf dem Drehzahlwert 32 des IV. Ganges gehalten wird.

Die Fig. 4b ist in Bezug auf den jeweiligen Verlauf des Kupplungsmomentes M_{K9} der Lastschaltkupplung 9 und des Kupplungsmomentes M_{K10} der Lastschaltkupplung 10 aufgrund der Erläuterung der Druckverlaufe der zugehörigen Arbeitsdrücke p₂₈ und p₂₉ in Fig. 4a selbstinterpretierend.

Die Fig. 4c veranschaulicht den nur in geringem Maße von einem ruckfreien Verlauf abweichenden ruckarmen Verlauf 59 des Abtriebsmomentes M₆ der Ausgangswelle 6 bei der erfindungsgemäßen Hochschaltung über zwei Gänge.

## Patentansprüche

1. Verfahren zum selbsttätigen Schalten mittels Druckmittel-Hilfskraft eines Mehrwege-Zahnräderwechselgetriebes mit einer Getriebeanordnung, bei der eine Eingangswelle (5) mit einer Ausgangswelle (6) über wenigstens eines von wenigstens zwei im Kraftfluß parallel zueinander liegenden Teilgetrieben (7,8) in Antriebsverbindung bringbar sind, bei der im Kraftfluß zwischen Eingangswelle und jeweils einem Teilgetriebe (7;8) eine Lastschaltkupplung (9;10) angeordnet ist, und bei der wenigstens eines der Teilgetriebe (7,8) wenigstens zwei Zahnradstufen mit jeweils einem mit seiner Welle (17,18) durch eine formschlüssige Zahnradkupplung (19;20;21) kuppelbaren Losrad aufweist, und bei der die Übersetzungen der Zahnradstufen so ausgelegt sind, daß jeweils in Bezug auf zwei nach ihrer Übersetzung benachbarten Gängen in dem einen Gang ein zugehöriges Teilgetriebe und in dem benachbarten Gang ein letzterem zugehöriges anderes Teilgetriebe durch Beaufschlagung jeweils eines die zugehörige Lastschaltkupplung betätigenden Kupplungsstellgliedes mit Arbeitsdruck in die Antriebsverbindung eingeschaltet ist,
**dadurch gekennzeichnet,**
daß zur Umschaltung zwischen zwei nicht benachbarten Gängen (II und IV), bei denen jeweils eine zugehörige andere Zahnradstufe (15 bzw. 16) desselben Teilgetriebes (8) in die Antriebsverbindung eingeschaltet ist d.h. Schalten über zwei Gänge, ein in seiner Übersetzung dazwischenliegender mittlerer Gang (III) vorübergehend eingelegt wird, bei welchem eine Zahnradstufe (13) eines anderen Teilgetriebes (7) in die Antriebsverbindung eingeschaltet ist, und daß der Arbeitsdruck in den Kupplungsstellgliedern (28, 29) der Lastschaltkupplungen (9, 10) der beiden an der Umschaltung beteiligten Teilgetriebe (7, 8) so geregelt wird, daß der Verlauf (30 bzw. 31) der Drehzahl (n₅) der Eingangswelle (5) zwischen dem dem alten Gang (IV bzw. II) entsprechenden Drehzahlwert (32 bzw. 33) und dem dem neuen Gang (II bzw. IV) entsprechenden Drehzahlwert (33 bzw. 32) wenigstens annähernd stetig ist, ohne auf dem Drehzahlwert (34) des mittleren Ganges (III) zu verharren.

2. Verfahren nach Anspruch 1,
**dadurch gekennzeichnet,**
daß in einer durch ein Schaltsignal für eine Rückschaltung über zwei nicht benachbarte Gänge (IV, II) ausgelösten ersten Schaltphase (36) der Arbeitsdruck (p₂₉) in demjenigen Kupplungsstellglied (29), welches in beiden nicht benachbarten Gängen (IV, II) mit im wesentlichen vollem Arbeitsdruck, d. h., der Arbeitsdruck ist mindestens auf einen das Drehmoment der Eingangswelle (5) haltenden Einrückdruckwert eingeregelt, beaufschlagt ist, auf einen gegenüber dem Einrückdruckwert (37) des höheren (IV) der beiden nicht benachbarten Gänge (IV, II) niedrigeren Phasendruckwert (38) abgesenkt wird.

3. Verfahren nach Anspruch 1 oder 2,
**dadurch gekennzeichnet,**
daß in einer durch ein Schaltsignal für eine Rückschaltung über zwei nicht benachbarte Gänge (IV, II) ausgelösten ersten Schaltphase (36) der Arbeitsdruck (p₂₈) in demjenigen Kupplungsstellglied (28), welches in dem mittleren Gang (III) an sich mit im wesentlichen vollem Arbeitsdruck, d. h., der Arbeitsdruck ist mindestens auf einen das Drehmoment der Eingangswelle (5) haltenden Einrückdruckwert eingeregelt, beaufschlagt ist, von Null auf einen gegenüber dem Einrückdruckwert niedrigeren Anlegedruckwert (39) angehoben wird.

4. Verfahren nach einem der Ansprüche 1 bis 3,
**dadurch gekennzeichnet,**
daß in einer sich an die erste anschließenden zweiten Schaltphase (40), die durch das Auftreten des dem mittleren Gang (III) entsprechenden Drehzahlwertes (34) der Drehzahl (n₅) der Eingangswelle (5) ausgelöst wird, eine Überschneidungssteuerung der Arbeitsdrücke in den beiden Kupplungsstellgliedern (28, 29) dahingehend erfolgt, daß der Arbeitsdruck (p₂₉) in dem in beiden nicht benachbarten Gängen (IV, II) im wesentlichen voll beaufschlagten Kupplungsstellglied (29) nach einer Rampenfunktion (41) abnimmt.

5. Verfahren nach einem der Ansprüche 1 bis 4,
**dadurch gekennzeichnet,**
daß in einer sich an die zweite anschließenden dritten Schaltphase (42), welche durch das Auftreten eines gegenüber dem Phasendruckwert (38) der ersten Schaltphase (36) niedrigeren Anlegedruckwertes (43) des Arbeitsdruckes (p₂₉) in dem in beiden nicht benachbarten Gängen (IV, II) im wesentlichen voll beaufschlagten Kupplungsstellglied (29) ausgelöst wird, der Arbeitsdruck (p₂₈) in dem im mittleren Gang (III) an sich im wesentlichen voll beaufschlagten Kupplungsstellglied (28) auf einem zwischen dem dem mittleren Gang (III) zugehörigen Einrückdruckwert einerseits und dem Anlegedruckwert (39) der ersten Schaltphase (36) liegenden Phasendruckwert (44) gehalten wird.

6. Verfahren nach einem der Ansprüche 1 bis 5,
**dadurch gekennzeichnet**,
daß in einer sich an die dritte anschließenden vierten Schaltphase (45), die durch das Auftreten eines Vorhaltdrehzahlwertes (46), welcher um eine festgelegte Differenzdrehzahl (47) vor dem dem niedrigeren (II) der beiden nicht benachbarten Gänge (IV, II) entsprechenden Drehzahlwert (33) der Drehzahl (n₅) der Eingangswelle (5) auftritt, ausgelöst wird, der Arbeitsdruck (p₂₉) in dem in beiden nicht benachbarten Gängen (IV, II) im wesentlichen voll beaufschlagten Kupplungsstellglied (29) auf den Anlegedruckwert (43) und der Arbeitsdruck (p₂₈) in dem im mittleren Gang (III) an sich im wesentlichen voll beaufschlagten Kupplungsstellglied (28) auf einen gegenüber dem Phasendruckwert (44) der dritten Schaltphase (42) höheren Phasendruckwert (48) geregelt werden und der höhere Phasendruckwert (48) auf den Anlegedruckwert (43) derart abgestimmt ist, daß die beiden zugehörigen Lastschaltkupplungen (9 und 10) in Summe das Drehmoment der Eingangswelle (5) übertragen.

7. Verfahren nach einem der Ansprüche 1 bis 6,
**dadurch gekennzeichnet,**
daß in einer sich an die vierte anschließenden fünften Schaltphase (49), welche durch einen Anstieg des Arbeitsdruckes (p₂₉) in dem in beiden nicht benachbarten Gängen (IV, II) im wesentlichen voll beaufschlagten Kupplungsstellglied (29) über den Anlegedruckwert (43) hinaus ausgelöst wird, eine Überschneidungssteuerung der Arbeitsdrücke (p₂₈, p₂₉) dahingehend erfolgt, daß die durch das in beiden nicht benachbarten Gängen (IV, II) im wesentlichen voll beaufschlagte Kupplungsstellglied (29) betätigte Lastschaltkupplung (10) das Drehmoment der Eingangswelle (5) mit Beendigung der fünften Schaltphase (49) allein überträgt.

8. Verfahren nach einem der Ansprüche 1 bis 7,
**dadurch gekennzeichnet,**
daß mit dem Auftreten des Schaltsignales für eine Rückschaltung über zwei nicht benachbarte Gänge (IV, II) in dem im mittleren Gang (III) in die Antriebsverbindung einschaltbaren Teilgetriebe (7) die Zahnradkupplung (20) für das Losrad (24) der Zahnradstufe (13) des mittleren Ganges (III) eingerückt ist oder wird.

9. Verfahren nach einem der Ansprüche 1 bis 8,
**dadurch gekennzeichnet,**
daß in dem in beiden nicht benachbarten Gängen (IV, II) in die Antriebsverbindung einschaltbaren Teilgetriebe (8) die Zahnradkupplung (21) für das Losrad (26) der Zahnradstufe (15) des niedrigeren (II) der beiden nicht benachbarten Gänge (IV, II) in der dritten Schaltphase (42), insbesondere wenn der Arbeitsdruck (p₂₉) in dem die Lastschaltkupplung (10) dieses Teilgetriebes (8) betätigenden Kupplungsstellglied (29) vollständig abgeschaltet ist, eingerückt wird.

10. Verfahren nach Anspruch 1,
**dadurch gekennzeichnet,**
daß in einer durch ein Schaltsignal für eine Hochschaltung über zwei nicht benachbarte Gänge (II, IV) ausgelösten ersten Schaltphase (51) der Arbeitsdruck (p₂₈) in dem im mittleren Gang (III) an sich mit im wesentlichen vollem Arbeitsdruck, d. h., der Arbeitsdruck ist mindestens auf einen das Drehmoment der Eingangswelle (5) haltenden Einrückdruckwert geregelt, beaufschlagten Kupplungsstellglied (28) auf einen zwischen Null und dem Einrückdruckwert liegenden Anlegedruckwert (39) angehoben ist.

11. Verfahren nach Anspruch 1 oder 10,
**dadurch gekennzeichnet,**
daß in einer durch ein Schaltsignal für eine Hochschaltung über zwei nicht benachbarte Gänge (II, IV) ausgelösten ersten Schaltphase (51) der Arbeitsdruck (p₂₉) in dem die Lastschaltkupplung (10) des in beiden nicht benachbarten Gängen (II, IV) in die Antriebsverbindung eingeschalteten Teilgetriebes (8) betätigenden Kupplungsstellglied (29) im wesentlichen auf voller Höhe, d. h., mindestens auf einem das Drehmoment der Eingangswelle (5) haltenden Einrückdruckwert (52) gehalten ist.

12. Verfahren nach Anspruch 10 oder 11,
**dadurch gekennzeichnet,**
daß in einer sich an die erste anschließenden zweiten Schaltphase (53), welche durch den Anstieg des Arbeitsdruckes (p₂₈) in dem im mittleren Gang (III) an sich im wesentlichen voll beaufschlagten Kupplungsstellglied (28) über den Anlegedruckwert (39) hinaus ausgelöst wird, eine Überschneidungssteuerung der Arbeitsdrücke (p₂₈, p₂₉) dahingehend erfolgt, daß mit weiter ansteigendem Arbeitsdruck (p₂₈) in dem im mittleren Gang (III) ansich im wesentlichen voll beaufschlagten Kupplungsstellglied (28) der Arbeitsdruck (p₂₉) in dem in den beiden nicht benachbarten Gängen (II, IV) im wesentlichen voll beaufschlagten Kupplungsstellglied (29) verringert wird.

13. Verfahren nach einem der Ansprüche 10 bis 12,
**dadurch gekennzeichnet,**
daß in einer sich an die zweite anschließenden dritten Schaltphase (54), die durch das Auftreten eines zwischen Null und dem Einrückdruckwert liegenden Anlegedruckwertes (43) des Arbeitsdruckes (p₂₉) in dem in beiden nicht benachbarten Gängen (II, IV) im wesentlichen voll beaufschlagten Kupplungsstellglied (29) ausgelöst wird, der Arbeitsdruck (p₂₈) in dem im mittleren Gang (III) an sich im wesentlichen voll beaufschlagten Kupplungsstellglied (28) auf einem gegenüber dem Einrückdruckwert höheren Phasendruckwert (55) gehalten wird.

14. Verfahren nach einem der Ansprüche 10 bis 13,
**dadurch gekennzeichnet,**
daß in der dritten Schaltphase (54), insbesondere nachdem der Arbeitsdruck (p₂₉) in dem in beiden nicht benachbarten Gängen (II, IV) im wesentlichen voll beaufschlagten Kupplungsstellglied (29) vollständig abgeschaltet ist, ein Kupplungssteuersignal erzeugt wird, durch welches eine Beaufschlagung mit Arbeitsdruck (p₂₉) in dem in beiden nicht benachbarten Gängen (II, IV) im wesentlichen voll beaufschlagten Kupplungsstellglied (29) mit einem Druckanstieg mindestens bis auf den Anlegedruckwert (43) ausgelöst wird.

15. Verfahren nach einem der Ansprüche 10 bis 14,
**dadurch gekennzeichnet**,
daß in einer sich an die dritte anschließenden vierten Schaltphase (56), welche durch den Anstieg des Arbeitsdruckes (p₂₉) in dem in beiden nicht benachbarten Gängen (II, IV) im wesentlichen voll beaufschlagten Kupplungsstellglied (29) über den Anlegedruckwert (43) hinaus ausgelöst wird, eine Überschneidungssteuerung der Arbeitsdrücke (p₂₈, p₂₉) dahingehend erfolgt, daß mit weiter ansteigendem Arbeitsdruck (p₂₉) in dem in beiden nicht benachbarten Gängen (II, IV) im wesentlichen voll beaufschlagten Kupplungsstellglied (29) der Arbeitsdruck (p₂₈) in dem im mittleren Gang (III) an sich im wesentlichen voll beaufschlagten Kupplungsstellglied (28) verringert wird.

16. Verfahren nach einem der Ansprüche 10 bis 15,
**dadurch gekennzeichnet,**
daß in einer sich an die vierte anschließenden fünften Schaltphase (57), die durch das Auftreten des Anlegedruckwertes (39) des Arbeitsdruckes (p₂₈) in dem im mittleren Gang (III) an sich im wesentlichen voll beaufschlagten Kupplungsstellglied (28) ausgelöst wird, der Arbeitsdruck (p₂₉) in dem in beiden nicht benachbarten Gängen (II, IV) im wesentlichen voll beaufschlagten Kupplungsstellglied (29) auf einen über dem Einrückdruckwert (52) liegenden Phasendruckwert (58) angehoben wird.

17. Verfahren nach einem der Ansprüche 10 bis 16,
**dadurch gekennzeichnet,**
daß der Arbeitsdruck (p₂₉) in dem in beiden nicht benachbarten Gängen (II, IV) im wesentlichen voll beaufschlagten Kupplungsstellglied (29) bei Auftreten des dem höheren (IV) der beiden nicht benachbarten Gänge (II, IV) entsprechenden Drehzahlwertes (32) der Drehzahl (n₅) der Eingangswelle (5) von dem höheren Phasendruckwert (58) der fünften Schaltphase (57) auf den Einrückdruckwert (52) abgesenkt wird.

18. Verfahren nach einem der Ansprüche 10 bis 17,
**dadurch gekennzeichnet,**
daß mit Beginn der ersten Schaltphase (51) in demjenigen Teilgetriebe (7), welches im mittleren Gang (III) in die Antriebsverbindung eingeschaltet ist, die Zahnradkupplung (20) für das Losrad (24) der Zahnradstufe (13) des mittleren Ganges (III) eingerückt ist bzw. wird.

19. Verfahren nach einem der Ansprüche 10 bis 18,
**dadurch gekennzeichnet,**
daß in der dritten Schaltphase (54), insbesondere wenn der Arbeitsdruck (p₂₉) in dem in beiden nicht benachbarten Gängen (II, IV) im wesentlichen voll beaufschlagten Kupplungsstellglied (29) vollständig abgeschaltet ist, in demjenigen Teilgetriebe (8), welches in beiden nicht benachbarten Gängen (II, IV) in die Antriebsverbindung eingeschaltet ist, die Zahnradkupplung (21) für das Losrad (27) der Zahnradstufe (16) des höheren (IV) der beiden nicht benachbarten Gänge (II, IV) eingerückt wird.

20. Verfahren nach einem der Ansprüche 10 bis 19,
**dadurch gekennzeichnet,**
daß durch das Einrücken der Zahnradkupplung (21) für das Losrad (27) der Zahnradstufe (16) des höheren (IV) der beiden nicht benachbarten Gänge (II, IV) in der dritten Schaltphase (54) das Kupplungssteuersignal ausgelöst wird.

## Claims

1. Method for the hydraulically assisted automatic shifting of a multi-path toothed-wheel gear change box with a gearbox arrangement in which an input shaft (5) can be brought into driving connection with an output shaft (6) via at least one of at least two gearbox subunits (7, 8) situated in parallel to one another in the flux of force, in which one power-shift clutch (9; 10) is arranged in the flux of force between the input shaft and in each case one gearbox subunit (7; 8), and in which at least one of the gearbox subunits (7, 8) has at least two gearwheel stages with in each case one loose wheel which can be coupled to its shaft (17, 18) by a positively engaging gearwheel clutch (19; 20; 21), and in which the transmission ratios of the gearwheel stages are configured in such a way that, in each case in relation to two gears adjacent in terms of their transmission ratio, in one gear one associated gearbox subunit and, in the adjacent gear, another gearbox subunit associated with the latter is connected into the driving connection by subjecting in each case one clutch actuator actuating the associated power-shift clutch to working pressure, characterised in that, for the purpose of changing over between two nonadjacent gears (II and IV) in the case of which in each case another associated gearwheel stage (15 or 16) of the same gearbox subunit (8) is connected into the driving connection, i.e. shifting via two gears, a middle gear (III) which lies between them in its transmission ratio and in which a gearwheel stage (13) of another gearbox subunit (7) is connected into the driving connection is temporarily engaged, and in that the working pressure in the clutch actuators (28, 29) of the power-shift clutches (9, 10) of the two gearbox subunits (7, 8) taking part in the changeover is controlled in such a way that the characteristic (30 or 31) of the speed (n₅) of the input shaft (5) between the speed value (32 or 33) corresponding to the old gear (IV or II) and the speed value (33 or 32) corresponding to the new gear (II or IV) is at least approximately steady, without remaining at the speed value (34) of the middle gear (III).

2. Method according to Claim 1, characterised in that, in a first shifting phase (36) triggered by a shift signal for a downshift via two nonadjacent gears (IV, II), the working pressure (p₂₉) in that clutch actuator (29) which is subjected in both nonadjacent gears (IV, II) to essentially the full working pressure, i.e. the working pressure is adjusted at least to an engagement pressure value which maintains the torque of the input shaft (5), is reduced to a phase pressure value (38) lower than the engagement pressure value (37) of the higher (IV) of the two nonadjacent gears (IV, II).

3. Method according to Claim 1 or 2, characterised in that, in a first shifting phase (36) triggered by a shift signal for a downshift via two nonadjacent gears (IV, II), the working pressure (p₂₈) in that clutch actuator (28) which, in the middle gear (III), is subjected as such to essentially the full working pressure, i.e. the working pressure is adjusted at least to an engagement pressure value which maintains the torque of the input shaft (5), is raised from zero to an application pressure value (39) lower than the engagement pressure value.

4. Method according to one of Claims 1 to 3, characterised in that, in a second shifting phase (40), which follows on from the first and is triggered by the occurrence of that speed value (34) of the speed (n₅) of the input shaft (5) which corresponds to the middle gear (III), a crossover control of the working pressures is effected in the two clutch actuators (28, 29) to the effect that the working pressure (p₂₉) in the clutch actuator (29) which is essentially fully pressurised in both nonadjacent gears (IV, II) decreases in accordance with a ramp function (41).

5. Method according to one of Claims 1 to 4, characterised in that, in a third shifting phase (42), which follows on from the second and is triggered by the occurrence of an application pressure value (43), lower than the phase pressure value (38) of the first shifting phase (36), of the working pressure (p₂₉) in the clutch actuator (29) which is essentially fully pressurised in both nonadjacent gears (IV, II), the working pressure +(p₂₈) in the clutch actuator (28) which is essentially fully pressurised in the middle gear (III) is held at a phase pressure value (44) lying between the engagement pressure value associated with the middle gear (III), on the one hand, and the engagement pressure value (39) of the first shifting phase (36).

6. Method according to one of Claims 1 to 5, characterised in that, in a fourth shifting phase (45), which follows on from the third and is triggered by the occurrence of a speed lead value (46) which occurs at a fixed differential speed (47) before that speed value (33) of the speed (n₅) of the input shaft (5) which corresponds to the lower (II) of the two nonadjacent gears (IV, II), the working pressure (p₂₉) in the clutch actuator (29) which is essentially fully pressurised in both nonadjacent gears (IV, II) is adjusted to the application pressure value (43) and the working pressure (p₂₈) in the clutch actuator (28) which is as such essentially fully pressurised in the middle gear (III) is adjusted to a phase pressure value (48) higher than the phase pressure value (44) of the third shifting phase (42), and the higher phase pressure value (48) is matched to the application pressure value (43) in such a way that the two associated power-shift clutches (9 and 10) together transmit the torque of the input shaft (5).

7. Method according to one of Claims 1 to 6, characterised in that, in a fifth shifting phase (49), which follows on from the fourth and is triggered by a rise, beyond the application pressure value (43), in the working pressure (p₂₉) in the clutch actuator (29) which is essentially fully pressurised in both nonadjacent gears (IV, II), a crossover control of the working pressures (p₂₈, p₂₉) is effected to the effect that the power-shift clutch (10) actuated by the clutch actuator (29) which is essentially fully pressurised in both nonadjacent gears (IV, II) is transmitting the torque of the input shaft (5) alone on completion of the fifth shifting phase (49).

8. Method according to one of Claims 1 to 7, characterised in that, upon occurrence of the shift signal for a downshift via two nonadjacent gears (IV, II), the gearwheel clutch (20) for the loose wheel (24) of the gearwheel stage (13) of the middle gear (III) has been or is engaged in the gearbox subunit (7) which can be connected into the driving connection in the middle gear (III).

9. Method according to one of Claims 1 to 8, characterised in that, in the gearbox subunit (8) which can be connected into the driving connection in both nonadjacent gears (IV, II), the gearwheel clutch (21) for the loose wheel (26) of the gearwheel stage (15) of the lower (II) of the two nonadjacent gears (IV, II) is engaged in the third shifting phase (42), in particular when the working pressure (p₂₉) in the clutch actuator (29) which actuates the power-shift clutch (10) of this gearbox subunit (8) is completely shut off.

10. Method according to Claim 1, characterised in that, in a first shifting phase (51) triggered by a shift signal for an upshift via two nonadjacent gears (II, IV), the working pressure (p₂₈) in the clutch actuator (28) which is subjected as such to essentially the full working pressure in the middle gear (III), i.e. the working pressure is adjusted at least to an engagement pressure value which maintains the torque of the input shaft (5), is raised to an application pressure value (39) lying between zero and the engagement pressure value.

11. Method according to Claim 1 or 10, characterised in that, in a first shifting phase (51) triggered by a shift signal for an upshift via two nonadjacent gears (II, IV), the working pressure (p₂₉) in the clutch actuator (29) which actuates the power-shift clutch (10) of the gearbox subunit (8) connected into the driving connection in both nonadjacent gears (II, IV) is held essentially at its full level, i.e. at least at an engagement pressure value (52) which maintains the torque of the input shaft (5).

12. Method according to Claim 10 or 11, characterised in that, in a second shifting phase (53) which follows on from the first and is triggered by the rise, beyond the application pressure value (39), in the working pressure (p₂₈) in the clutch actuator (28) which is as such essentially fully pressurised in the middle gear (III), a crossover control of the working pressures (p₂₈,p₂₉) is effected to the effect that, as the working pressure (p₂₈) rises in the clutch actuator (28) which is as such essentially fully pressurised in the middle gear (III), the working pressure (p₂₉) in the clutch actuator (29) which is essentially fully pressurised in the two nonadjacent gears (II, IV) is reduced.

13. Method according to one of Claims 10 to 12, characterised in that, in a third shifting phase (54), which follows on from the second and is triggered by the occurrence of an application pressure value (43), lying between zero and the engagement pressure value, of the working pressure (p₂₉) in the clutch actuator (29) which is essentially fully pressurised in both nonadjacent gears (II, IV), the working pressure (p₂₈) in the clutch actuator (28) which is as such essentially fully pressurised in the middle gear (III) is held at a phase pressure value (55) which is higher than the engagement pressure value.

14. Method according to one of Claims 10 to 13, characterised in that, in the third shifting phase (54), in particular after the working pressure (p₂₉) in the clutch actuator (29) which is essentially fully pressurised in both nonadjacent gears (II, IV) has been completely shut off, a clutch-control signal is produced which triggers a pressurisation with working pressure (p₂₉) in the clutch actuator (29) which is essentially fully pressurised in both nonadjacent gears (II, IV), with a pressure rise at least up to the application pressure value (43).

15. Method according to one of Claims 10 to 14, characterised in that, in a fourth shifting phase (56), which follows on from the third and is triggered by the rise of the working pressure (p₂₉) beyond the application pressure value (43) in the clutch actuator (29) which is essentially fully pressurised in both nonadjacent gears (II, IV), a crossover control of the working pressures (p₂₈, p₂₉) is effected to the effect that, as the working pressure (p₂₉) in the clutch actuator (29) which is essentially fully pressurised in both nonadjacent gears (II, IV) continues to rise, the working pressure (p₂₈) in the clutch actuator (28) which is as such essentially fully pressurised in the middle gear (III) is reduced.

16. Method according to one of Claims 10 to 15, characterised in that, in a fifth shifting phase (57), which follows on from the fourth and is triggered by the occurrence of the application pressure value (39) of the working pressure (p₂₈) in the clutch actuator (28) which is as such essentially fully pressurised in the middle gear (III), the working pressure (p₂₉) in the clutch actuator (29) which is essentially fully pressurised in both nonadjacent gears (II, IV) is raised to a phase pressure value (58) which is above the engagement pressure value (52).

17. Method according to one of Claims 10 to 16, characterised in that, upon occurrence of that speed value (32) of the speed (n₅) of the input shaft (5) which corresponds to the higher (IV) of the two nonadjacent gears (II, IV), the working pressure (p₂₉) in the clutch actuator (29) which is essentially fully pressurised in both nonadjacent gears (II, IV) is reduced from the higher phase pressure value (58) of the fifth shifting phase (57) to the engagement pressure value (52).

18. Method according to one of Claims 10 to 17, characterised in that, with the beginning of the first shifting phase (51) in that gearbox subunit (7) which is connected into the driving connection in the middle gear (III), the gearwheel clutch (20) for the loose wheel (24) of the gearwheel stage (13) of the middle gear (III) has been or is engaged.

19. Method according to one of Claims 10 to 18, characterised in that, in the third shifting phase (54), in particular when the working pressure (p₂₉) in the clutch actuator (29) which is essentially fully pressurised in both nonadjacent gears (II, IV) is completely shut off, the gearwheel clutch (21) for the loose wheel (27) of the gearwheel stage (16) of the higher (IV) of the two nonadjacent gears (II, IV) is engaged in that gearbox subunit (8) which is connected into the driving connection in both nonadjacent gears (II, IV).

20. Method according to one of Claims 10 to 19, characterised in that the clutch-control signal is triggered by the engagement of the gearwheel clutch (21) for the loose wheel (27) of the gearwheel stage (16) of the higher (IV) of the two nonadjacent gears (II, IV) in the third shifting phase (54).

## Revendications

1. Procédé de changement de vitesse automatique, à assistance par pression, d'une boîte de vitesse à engrenages à plusieurs vitesses comportant un agencement de boîte de vitesse dans lequel l'arbre d'entrée (5) peut être amené en liaison d'entraînement avec un arbre de sortie (6) par au moins l'un d'au moins deux jeux d'engrenages partiels (7, 8) disposés en parallèle l'un à l'autre dans le trajet de transmission, dans lequel un embrayage de charge (9 ; 10) est disposé dans le trajet de transmission entre l'arbre d'entrée et chacun des jeux d'engrenages partiels (7 ; 8) et dans lequel au moins l'un des jeux d'engrenages partiels (7 ; 8) inclut au moins deux étages d'engrenages comportant chacun une roue folle qui peut être accouplée avec son arbre (17, 18) par un embrayage (19 ; 20 ; 21) à engrenages en engagement positif, et dans lequel les démultiplications des étages d'engrenages sont réalisées d'une manière telle que, pour deux vitesses voisines quant à leurs démultiplications, un jeu d'engrenages associé à une première vitesse et un autre jeu d'engrenages associé à la vitesse voisine de celle-ci soient enclenchés en appliquant dans la liaison d'entraînement une pression de travail respectivement à l'actionneur d'embrayage qui actionne l'embrayage de charge associé,
**caractérisé en ce que**
pour un changement de vitesse entre deux vitesses qui ne sont pas voisines (II et IV), dans lesquelles respectivement un autre étage associé (15 ou 16) d'engrenages du même jeu d'engrenages partiel (8) est enclenché dans la liaison d'entraînement, c'est-à-dire un passage de vitesse de deux vitesses à la fois, une vitesse moyenne (III) intermédiaire quant à sa démultiplication est temporairement passée, dans laquelle un étage (13) d'engrenages d'un autre jeu d'engrenages partiel (7) est endenché dans la liaison d'entraînement et en ce que la pression de travail des actionneurs (28, 29) d'embrayage des embrayages de charge (9, 10) des deux jeux d'engrenages partiels (7, 8) qui participent au changement de vitesse est réglée d'une manière telle que le tracé (30 ou 31) de la vitesse de rotation (n₅) de l'arbre d'entrée (5) soit au moins approximativement continu entre la valeur de la vitesse de rotation (32 ou 33) qui correspond à l'ancienne vitesse (IV ou II) et la valeur de vitesse de rotation (33 ou 32) qui correspond à la nouvelle vitesse (II ou IV) sans demeurer à la valeur de vitesse de rotation (34) de la vitesse moyenne (III).

2. Procédé selon la revendication 1,
**caractérisé en ce que**
au cours d'une première phase de commutation déclenchée par un signal de commutation pour une rétrogradation entre deux vitesses non voisines (IV, II), la pression de travail (p₂₉) existant dans l'actionneur d'embrayage (29), qui est appliquée dans les deux vitesses non voisines (IV, II) à une pression de travail sensiblement totale, c'est-à-dire que la pression de travail est réglée au moins à une valeur de pression d'engagement qui maintienne le couple de l'arbre d'entrée (5), est abaissée à une valeur (38) de pression de phase qui est inférieure à la valeur de pression (37) d'engagement de la vitesse la plus élevée (IV) parmi les deux vitesses non voisines (IV, II).

3. Procédé selon la revendication 1 ou 2,
**caractérisé en ce que**
au cours d'une première phase de commutation déclenchée par un signal de commutation pour une rétrogradation entre deux vitesses non voisines (IV, II), la pression de travail (p₂₈) existant dans l'actionneur d'embrayage (28), qui est appliquée dans la vitesse moyenne (III) la pression de travail sensiblement complète, c'est-à-dire que la pression de travail est réglée au moins à une valeur de pression d'engagement qui maintienne le couple de l'arbre d'entrée (5), est élevée de zéro à une valeur de pression (39) d'application inférieure à la valeur de pression d'engagement.

4. Procédé selon l'une des revendications 1 à 3,
**caractérisé en ce que**
au cours d'une deuxième phase de commutation (40), consécutive à la première, qui est déclenchée par l'apparition, pour la vitesse de rotation (n₅) de l'arbre d'entrée (5), de la valeur (34) de vitesse de rotation qui correspond à la vitesse moyenne (III), une commande de chevauchement des pressions de travail des deux actionneurs (28, 29) d'embrayage est réalisée d'une manière telle que la pression de travail (p₂₉) diminue selon une fonction (41) en rampe dans l'actionneur (29) d'embrayage où la pression est appliquée de façon sensiblement totale dans les deux vitesses non voisines (IV, II).

5. Procédé selon l'une des revendications 1 à 4,
**caractérisé en ce que**
dans une troisième phase de commutation (42), consécutive à la deuxième, qui est déclenchée à l'apparition d'une valeur de pression (43) d'application, moindre que la valeur de pression (38) de phase de la première phase (36) de commutation, pour la pression de travail (p₂₉) dans l'actionneur (29) d'embrayage où la pression est appliquée de façon sensiblement totale dans les deux vitesses non voisines (IV, II), la pression de travail (p₂₈) est maintenue, dans l'actionneur (28) d'embrayage où la pression est appliquée de façon sensiblement totale en soi dans la vitesse moyenne (III), à une valeur de pression (44) de phase qui est située entre la valeur de pression d'engagement associée à la vitesse moyenne (III) d'une part et la valeur de pression (39) d'application de la première phase de commutation (36).

6. Procédé selon l'une des revendications 1 à 5,
**caractérisé en ce que**
au cours d'une quatrième phase de commutation (45), consécutive à la troisième, qui est déclenchée par l'apparition d'une valeur précurseur (46) de vitesse de rotation qui apparaît pour une vitesse de rotation qui présente une différence définie (44) avec la valeur de vitesse de rotation (33) qui correspond, pour la vitesse de rotation (n₅) de l'arbre d'entrée (5), à la plus petite (II) des deux vitesses non voisines (IV, II), la pression de travail (p₂₉) dans l'actionneur d'embrayage (29) où la pression est appliquée de façon sensiblement totale dans les deux vitesses non voisines (IV, II) est réglée à la valeur de pression (43) d'application et la pression de travail (p₂₈) dans l'actionneur d'embrayage (28) où la pression est appliquée de façon sensiblement totale dans la vitesse moyenne (III) est réglée à une valeur de pression (48) de phase supérieure à la valeur de pression (44) de phase de la troisième phase de commutation (42) et la valeur de pression (48) de phase supérieure est adaptée à la valeur de pression (43) d'application d'une manière telle que les deux embrayages associés de charge (9 et 10) transfèrent ensemble le couple de l'arbre d'entraînement (5).

7. Dispositif selon l'une des revendications 1 à 6,
**caractérisé en ce que**
au cours d'une cinquième phase (49) de commutation, consécutive à la quatrième, qui est déclenchée par une élévation, au delà de la valeur de pression (43) d'application, de la pression de travail (p₂₉) dans l'actionneur (29) d'embrayage où la pression est appliquée de façon sensiblement totale dans les deux vitesses non voisines (IV, II), une commande de chevauchement des pressions de travail (p₂₈, p₂₉) est réalisée d'une manière telle que l'embrayage de charge (10) actionné par l'actionneur (29) d'accouplement où la pression est appliquée de façon sensiblement totale dans les deux vitesses non voisines (IV, II) transfère seul le couple de l'arbre d'entraînement (5) à l'achèvement de la cinquième phase de commutation (49).

8. Procédé selon l'une des revendications 1 à 7,
**caractérisé en ce que**
lors de l'apparition du signal de commutation concernant une rétrogradation entre deux vitesses non voisines (IV, II), l'embrayage (20) à engrenages de la roue folle (24) de l'étage (13) d'engrenages de la vitesse moyenne (III), qui fait partie du jeu d'engrenages partiel susceptible d'être enclenché dans la liaison d'entraînement dans la vitesse moyenne (III), est engagé ou le devient.

9. Procédé selon l'une des revendications 1 à 8,
**caractérisé en ce que**
dans le jeu d'engrenages partiel (8) susceptible d'être enclenché dans la liaison d'entraînement dans les deux vitesses non voisines (IV, II), l'embrayage à engrenages (21) de la roue folle (26) de l'étage (15) d'engrenages de la plus petite (II) des deux vitesses non voisines (IV, II) est engagé dans la troisième phase de commutation (42), en particulier lorsque la pression de travail (p₂₉) dans l'actionneur (24) d'embrayage qui actionne l'embrayage (10) de charge de ce jeu d'engrenages partiel (8) cesse totalement d'être appliquée.

10. Procédé selon la revendication 1,
**caractérisé en ce que**
dans une première phase de commutation (51) déclenchée par un signal de commutation concernant un passage à une vitesse supérieure entre deux vitesses non voisines (II, IV), la pression de travail (p₂₈) dans l'actionneur (28) d'embrayage qui est en soi appliquée de façon sensiblement totale dans la vitesse moyenne (III), c'est-à-dire que la pression de travail est réglée au moins à une valeur de pression d'engagement qui maintienne le couple de l'arbre d'entrée (5), est élevée à une valeur de pression (39) d'application comprise entre zéro et la valeur de pression d'engagement.

11. Procédé selon la revendication 1 ou 10,
**caractérisé en ce que**
au cours d'une première phase de commutation (51) déclenchée par un signal de commutation concernant un passage à une vitesse supérieure entre deux vitesses non voisines (II, IV), la pression de travail (p₂₉) dans l'actionneur (29) d'embrayage qui actionne l'embrayage de charge (10) du jeu d'engrenages partiel (8) enclenché dans la liaison d'entraînement dans les deux vitesses non voisines (II, IV) est maintenu sensiblement à pleine hauteur, c'est-à-dire au moins à une valeur de pression (52) d'engagement qui maintienne le couple de l'arbre d'entrée (5).

12. Procédé selon la revendication 10 ou 11,
**caractérisé en ce que**
au cours d'une deuxième phase de commutation (53), consécutive à la première, qui est déclenchée par l'élévation, au-delà de la valeur de pression (39) d'application, de la pression de travail (p₂₈) dans l'actionneur (28) d'embrayage où la pression est appliquée de façon sensiblement totale dans la vitesse moyenne (III), une commande de chevauchement des pressions de travail (p₂₈, p₂₉) est réalisée d'une manière telle que, lors de la poursuite de la croissance de la pression de travail (p₂₈) dans l'actionneur (28) d'embrayage où la pression est appliquée de façon sensiblement totale en soi dans la vitesse moyenne (III), la pression (p₂₉) dans l'actionneur (29) d'embrayage où la pression est appliquée de façon sensiblement totale en soi dans les deux vitesses non voisines (II, IV) soit réduite.

13. Procédé selon l'une des revendications 10 à 12,
**caractérisé en ce que**
au cours d'une troisième phase de commutation (54), consécutive à la deuxième, qui est déclenchée par l'apparition d'une valeur de pression (43) d'application située entre zéro et la valeur de pression d'engagement de la pression de travail (p₂₉) dans l'actionneur (29) d'embrayage où la pression est appliquée de façon sensiblement totale en soi dans les deux vitesses non voisines (II, IV), la pression moyenne (p₂₈) dans l'actionneur (28) d'embrayage où la pression est appliquée de façon sensiblement totale dans la vitesse moyenne (III) est maintenue à une valeur de pression (55) de phase supérieure à la valeur de pression d'engagement.

14. Procédé selon l'une des revendications 10 à 13,
**caractérisé en ce que**
au cours de la troisième phase de commutation (54), en particulier après que la pression de travail (p₂₉) ait complètement cessé d'être appliquée dans l'actionneur d'embrayage (29) où la pression est appliquée de façon sensiblement totale en soi dans les deux vitesses non voisines (II, IV), il est engendré un signal de commande d'embrayage par lequel est déclenchée l'application de la pression de travail (p₂₉) dans l'actionneur (29) de couple où la pression est appliquée de façon sensiblement totale dans les deux vitesses non voisines (II, IV) en provoquant une élévation de pression au moins jusqu'à la valeur de pression (43) d'application.

15. Procédé selon l'une des revendications 10 à 14,
**caractérisé en ce que**
au cours d'une quatrième phase de commutation (56), consécutive à la troisième, qui est déclenchée par l'élévation, au-delà de la valeur de pression (43) d'application, de la pression (p₂₉) dans l'actionneur (29) d'embrayage où la pression est appliquée de façon sensiblement totale dans les deux vitesses non voisines (II, IV), une commande à chevauchement des pressions de travail (p₂₈, p₂₉) est réalisée d'une manière telle que la pression de travail (p₂₈) soit réduite dans l'actionneur (28) de couple où la pression est appliquée de façon sensiblement totale en soi dans la troisième vitesse (III) lors de la poursuite de la pression (p₂₉) dans l'actionneur (29) d'embrayage où la pression est appliquée de façon sensiblement totale en soi dans les deux vitesses non voisines (II, IV).

16. Procédé selon une des revendications 10 à 15,
**caractérisé en ce que**
au cours d'une cinquième phase (57), consécutive à la quatrième, qui est déclenchée par l'apparition de la valeur de pression (39) d'application de la pression de travail (p₂₈) dans l'actionneur (28) d'embrayage où la pression est appliquée de façon sensiblement totale en soi dans la vitesse moyenne (III), la pression de travail (p₂₉) dans l'actionneur (29) d'embrayage où la pression est appliquée de façon sensiblement totale en soi dans les deux vitesses non voisines (II, IV) est élevée à une valeur de pression (58) de phase située au-dessus de la valeur de pression (52) d'engagement.

17. Procédé selon l'une des revendications 10 à 16,
**caractérisé en ce que**
la pression de travail (p₂₉) dans l'actionneur (29) d'embrayage où la pression est appliquée de façon sensiblement totale en soi dans les deux vitesses non voisines (II, IV) est abaissée de la valeur de pression supérieure (58) de phase de la cinquième phase de commutation (57) à la valeur de pression (52) d'engagement lors de l'apparition de la valeur (32) de vitesse de rotation de la vitesse de rotation (n₅) de l'arbre d'entrée (5) qui correspond à la plus élevée (IV) des deux vitesses non voisines (II, IV).

18. Procédé selon l'une des revendications 10 à 17,
**caractérisé en ce que**
au début de la première phase de commutation (51), l'embrayage (20) à engrenages de la roue folle (24) de l'étage (13) d'engrenages de la vitesse moyenne (III) est engagé, ou le devient, dans le jeu d'engrenages partiel qui est enclenché dans la liaison d'entraînement pour la vitesse moyenne (III).

19. Procédé selon l'une des revendications 10 à 18,
**caractérisé en ce que**
au cours de la troisième phase de commutation (54), en particulier lorsque la pression de travail (p₂₉) cesse totalement d'être appliquée à l'actionneur (29) d'embrayage où la pression est appliquée de façon sensiblement totale en soi dans les deux vitesses non voisines (II, IV), l'embrayage (21) à engrenages de la roue folle (24) de l'étage (16) d'engrenages de la plus élevée (IV) des deux vitesses non voisines (II, IV) est engagé dans le jeu d'engrenages partiel (8) qui est enclenché dans la liaison d'entraînement dans les deux vitesses non voisines (II, IV).

20. Procédé selon l'une des revendications 10 à 19,
**caractérisé en ce que**
le signal de commande d'embrayage est déclenché par l'engagement de l'embrayage (21) à engrenages pour la roue folle (27) de l'étage (16) d'engrenages de la plus élevée (IV) des deux vitesses non voisines (II, IV) au cours de la troisième phase de commutation (54).
